Europäisches Patentamt

European Patent Office

Office européen des brevets

(11) Veröffentlichungsnummer : **0 158 195**
**B1**

(19)

(12) **EUROPÄISCHE PATENTSCHRIFT**

(45) Veröffentlichungstag der Patentschrift :
**15.03.89**

(51) Int. Cl.⁴ : **C 01 B 25/46**

(21) Anmeldenummer : **85103425.6**

(22) Anmeldetag : **22.03.85**

(54) **Verfahren zur Herstellung einer Alkaliphosphatlösung.**

(30) Priorität : **06.04.84 DE 3413020**

(43) Veröffentlichungstag der Anmeldung :
**16.10.85 Patentblatt 85/42**

(45) Bekanntmachung des Hinweises auf die Patenterteilung : **15.03.89 Patentblatt 89/11**

(84) Benannte Vertragsstaaten :
**BE DE FR GB IT NL**

(56) Entgegenhaltungen :
**EP--A-- 0 022 186**
**DE--A-- 1 811 813**

(73) Patentinhaber : **HOECHST AKTIENGESELLSCHAFT**
**Postfach 80 03 20**
**D-6230 Frankfurt am Main 80 (DE)**

(72) Erfinder : **Gradl, Reinhard, Dr.**
**Heimbacher Weg 27**
**D-5042 Erftstadt (DE)**
Erfinder : **Heymer, Gero, Dr.**
**Fasanenaue 12**
**D-5042 Erftstadt (DE)**

## Beschreibung

Die vorliegende Erfindung betrifft ein Verfahren zur Herstellung einer wäßrigen Alkaliphosphatlösung durch Mischen einer organischen Phase, bestehend aus einer Lösung von Phosphorsäure in einem mit Wasser nicht oder nur begrenzt mischbaren Lösungsmittel, mit einer wäßrigen Phase, bestehend aus einer Alkalilösung in Wasser. Dabei werden die organische und die wäßrige Phase insgesamt in Volumenverhältnissen von größer als 1 : 1 eingesetzt und die dabei gebildete wäßrige Alkaliphosphatlösung wird anschließend von der verbleibenden organischen Phase abgetrennt.

Es ist aus der DE-B2-1 811 813 bereits bekannt, Alkaliphosphatlösungen dadurch zu erhalten, daß man Lösungen von Phosphorsäure, die man beispielsweise durch Extraktion von Naßverfahrensphosphorsäure mit organischen Lösungsmitteln erhalten hat, mit wäßrigen Alkalilösungen im Gegenstrom extrahiert.

Dieser Arbeitsweise haften jedoch eine .Reihe von Nachteilen an. Die zur Rückextraktion verwendeten wäßrigen Phosphationen und Alkaliionen enthaltenden Lösungen sollen deutlich sauer sein. Weiterhin soll die Menge vorhandener Alkaliionen, bezogen auf die vorhandenen Phosphationen, nicht wesentlich über dem dem Monoalkaliphosphat entsprechenden Verhältnis liegen, d. h. neutrale oder alkalische Alkaliphosphatlösungen können bei diesem Verfahren nicht hergestellt werden.

Um Emulsionen bei der Reextraktion zu vermeiden, muß das rezirkulierende Lösungsmittel einer aufwendigen zweistufigen Wäsche unterzogen werden.

Aus dem angegebenen Beispiel wird deutlich, daß für die Rückextraktion eine dreistufige Anlage erforderlich ist, wobei anschließend eine weitere Stufe zur Neutralisation mit Natriumcarbonat notwendig ist.

Aufgabe der vorliegenden Erfindung war es, die bekannten Arbeitsweisen zu verbessern und einen Weg zu finden, welcher deren Nachteile umgeht.

Überraschenderweise wurde nun gefunden, daß sich diese Aufgabe lösen läßt, wenn man — umgekehrt als normalerweise üblich — die volumenmäßig wesentlich größere Menge an organischer Phase in der kleineren Menge an wäßriger Phase dispergiert und letztere als die kontinuierliche Phase führt.

Dies wird dadurch erreicht, daß man

a) das Mischen unter gleichzeitiger Umsetzung der beiden Phasen in mindestens einer Reaktionszone durchführt, die jeweils eine Misch- und eine Trennzone umfaßt, wobei die Mischzone in unmittelbarer Verbindung mit der Trennzone steht, indem sie — zumindest mit ihrer Obergrenze — innerhalb oder direkt unterhalb der Trennzone liegt ;

b) die organische Phase in der wäßrigen Phase kontinuierlich dispergiert, indem man vor Beginn der Umsetzung Misch- und Trennzone mit einer dem gewünschten Endprodukt entsprechenden wäßrigen Alkaliphosphatlösung füllt ;

c) zur Aufrechterhaltung eines Volumenüberschusses an wäßriger Phase in der Mischzone den Zu- bzw. Ablauf der Phasen zu bzw. von der Reaktionszone so einstellt, daß die Trennschicht der beiden Phasen wesentlich oberhalb der Obergrenze der Mischzone gehalten wird und

d) die beiden Phasen in einer solchen Gesamtmenge der Reaktionszone zuführt, daß sich in der Mischzone ein Volumenverhältnis von organischer : wäßriger Phase von 4 : 6 bis 2 : 8 einstellt.

Vorteilhafterweise führt man die Umsetzung in einer Reaktionszone durch die als Mixer-Settler gemäß der europäischen Patentschrift 0 022 186 oder in Form einer Rührwerks- oder pulsierenden Siebbodenkolonne ausgestaltet ist.

Wird als Reaktionszone eine Kolonne verwendet so empfiehlt es sich, die Ausgangsprodukte etwa in der Kolonnenmitte zuzuführen, wobei man zweckmäßigerweise die Alkalilösung oberhalb der Phosphorsäurelösung aufgibt. Die Alkaliphosphatlösung wird dann am Boden und das nach der Umsetzung verbliebenen organischen Lösungsmittel am Kopf der Kolonne abgezogen.

Die Verwendung einer Kolonne bietet sich insbesondere dann an, wenn eine solche von der Gewinnung der eingesetzten organischen Phosphorsäure her, durch Extraktion von roher Phosphorsäure mit einem organischen Lösungsmittel, bereits vorhanden ist.

Die Wirkung der erfindungsgemäßen Maßnahmen war für den Fachmann überraschend, da es sich bei der Herstellung der Alkaliphosphatlösung um eine chemische Reaktion zwischen den Ionen der Phosphorsäure und den Alkaliionen der wäßrigen Lösung handelt und nicht um eine Extraktion, bei der nach dem Verteilungsgesetz die Phosphorsäure von der organischen Phase in die wäßrige Phase überführt wird.

Es war weiterhin überraschend und keineswegs vorhersehbar, daß sich dadurch die bekannten Schwierigkeiten bei dieser Umsetzung, nämlich die Gefahr der Verkrustungen durch auskristallisierendes Alkaliphosphat, völlig vermeiden läßt.

Weitere Vorteile des erfindungsgemäßen Verfahrens sind, daß das von der Phosphorsäure befreite Lösungsmittel nicht trübe, sondern vollständig klar aus der Reaktionszone abläuft, daß kurzzeitige Schwankungen in der pro Zeiteinheit dem Mischsystem zugeführten Alkalilösung bzw. organischer Phosphorsäurelösung zu keinen Störungen hinsichtlich Ausbeute, Alkali : Phosphat-Verhältnis oder Verkrustungen führen und daß als Endprodukte Alkaliphosphatlösungen mit Konzentrationen entstehen, die höher sind als bei dem bekannten Verfahren.

Unter Alkaliphosphatlösungen im Sinne der Erfindung sind wäßrige Lösungen der Orthophosphate von Ammonium-, Kalium-, insbesondere aber Natrium, mit einem Ammonium- bzw. Alkali : Phosphor-Molverhältnis von 1 : 1 bis 2 : 1 zu verstehen. Im Falle des Natriums beispielsweise kann also eine Mononatriumdihydrogenphosphat- oder Dinatriumhydrogenphosphatlösung oder jede beliebige Mischung aus beiden Verhältnissen und besonders vorteilhaft ein Na : P-Molverhältnis von 5 : 3 eingestellt werden, wie es für die Herstellung von Pentanatriumtriphosphat notwendig ist.

Die für die erfindungsgemäß eingesetzten organischen Phosphorsäurelösungen entstehen in der Regel bei der flüssig-Extraktion von Rohphosphorsäuren mit einem organischen Lösungsmittel, wobei der entstehende Extrakt meistens anschließend mit einer wäßrigen Lösung zur Entfernung von geringen Restmengen an Verunreinigungen gewaschen wird. Als organische Lösungsmittel dienen dabei vorzugsweise Phosphorsäureester, oder Alkylalkohole mit Alkylresten der Kettenlänge C $\geqslant$ 4, also beispielsweise Tributylphosphat oder Butanol und Pentanol. Die Konzentration der Phosphorsäure in diesem organischen Lösungsmittel liegt im allgemeinen zwischen 3 und 25 Gew.% $P_2O_5$.

Als Alkalikomponente können zweckmäßigerweise Hydroxide, Carbonate oder phosphate dienen. Zur Herstellung von Natriumphosphatlösungen wird vorteilhafterweise Natronlauge mit Konzentrationen von 30-70 %, insbesondere mit 50 % NaOH eingesetzt. Zur Herstellung von Ammoniumverbindungen kann ebenfalls eine wäßrige Ammoniumhydroxid-, -carbonat- oder Phosphatlösung aber auch gasförmiger Ammoniak in Verbindung mit einer entsprechenden Menge Wasser eingesetzt werden.

Da es sich bei dem erfindungsgemäßen Verfahren um eine chemische Reaktion und nicht um eine Extraktion handelt, ist zur technischen Durchführung in der Regel nur eine einzige Verfahrensstufe erforderlich.

Die nachfolgenden Beispiele sollen lediglich zur näheren Erläuterung, jedoch nicht zur Begrenzung des Erfindungsgegenstandes dienen.

Beispiele

Rohphosphorsäure, die hergestellt wurde durch Aufschluß von nordafrikanischem Phosphaterz mit Schwefelsäure, wurde zunächst mit Kalk und Aktivkohle zur Verminderung des Sulfatgehalts und der organischen Verunreinigungen vorbehandelt. Diese vorgereinigte Säure wurde anschließend in einer mehrstufigen Mischer-Abscheider-Batterie mit einem Gemisch aus n-Pentanol und iso-Amylalkohol unter Verwendung von Schwefelsäure als Extraktionshilfsmittel extrahiert. Dabei entstand ein organischer Extrakt der praktisch die gesamte Phosphorsäure und geringe Mengen an Verunreinigungen aus dem Rohphosphat enthielt. Dieser Rohextrakt wurde in einer mehrstufigen Mischer-Abscheider-Batterie mit einer kleinen Menge Wasser im Gegenstrom gewaschen und die entstehende Waschflüssigkeit in die Extraktionsstufe rezirkuliert. Dabei entsteht eine gereinigte Phosphorsäure, die im organischen Lösungsmittel gelöst ist. Diese phosphorsäurehaltige Lösungsmittelphase ist Ausgangsprodukt für die folgenden Versuche.

Beispiel 1

In einer Mischer-Abscheider-Apparatur, wie sie in der EP-00 22 186 beschrieben ist, wurden die Misch- und die Trennzone mit einer wäßrigen Mononatriumphosphatlösung gefüllt. Dann wurden gleichzeitig 6,3 l/h der oben beschriebenen phosphorsäurehaltigen Lösungsmittelphase aus der Waschstufe mit einem $P_2O_5$-Gehalt von 9 Gew% und 0,34 l/h einer wäßrigen Natronlaugelösung (50 Gew.% NaOH) in den Mischer des Reaktors eindosiert. Die organische Phase wurde dispergiert, während die wäßrige Phase die kontinuierliche Phase blieb. Am unteren Ende des Abscheiders wurden 1 446 g/h einer Mononatriumphosphatlösung mit einem $P_2O_5$-Gehalt von 32,0 Gew% abgezogen, während am oberen Teil des Abscheiders das Lösungsmittel mit einem Restgehalt an $P_2O_5$ von 0,043 Gew.% ablief. Die Lösungsmittelphase und die Mononatriumphosphatlösung waren völlig klar. Die Anteile an wäßriger Phase, die mit der organischen Phase ausgetragen wurden (Entrainment) betrugen weniger als 100 ppm (Vol.). Während der Reaktion kam es zu keinen Krustenbildungen durch auskristallisierende Verbindungen.

Beispiel 2

Wie in Beispiel 1 wurde die gleiche Menge alkoholischer Phosphorsäurelösung in der gleichen Weise mit 485 ml/h Natronlauge umgesetzt. Dabei entstand eine Natriumphosphatlösung mit einem Na : P-Molverhältnis von 1,34 : 1 und einem $P_2O_5$-Gehalt von 29,4 Gew%. Der ablaufende Alkohol hatte einen Restgehalt von 0,012 Gew% $P_2O_5$ mit einem Entrainment an waßriger Phase von < 100 ppm (Vol.). Während der Reaktion kam es zu keinen Störungen und Krustenbildungen.

Beispiel 3

Wie in Beispiel 1 wurde die gleiche Menge alkoholischer Phosphorsäurelösung in der gleichen Weise mit 595 ml/h Natronlauge umgesetzt. Dabei entstand eine Natriumphosphatlösung mit einem Na : P-Molverhältnis von 1,667 : 1 und einem $P_2O_5$-Gehalt von 27,2 Gew% $P_2O$-5. Diese Lösung ist beispielsweise direkt geeignet zur Herstellung von Pentanatriumtripolyphosphat. Der verbleibende Alkohol hatte einen Restgehalt von 0,012 Gew% $P_2O_5$ und kein meßbares Entrainment. Auch hierbei verlief die Umsetzung problemlos.

Beispiel 4

Wie in Beispiel 1 wurde die gleiche Menge Alkoholischer Phosphorsäurelösung in der gleichen Weise mit 1 400 ml einer 10 Gew%igen Natronlaugelösung umgesetzt. Dabei entstand eine Dinatriumphosphatlösung mit 20,1 Gew%

P₂O₅. Der fließende Alkohol hatte einen P₂O₅-Gehalt von 0,011 Gew% und etwa 100 ml (Vol.) Entrainment. Gelegentlich sich an der Eintrittsstelle der Natronlauge bildende Krusten lösten sich rasch inder Phosphatsalzlösung auf.

Beispiel 5 (Vergleichsbeispiel)

Es wurde Beispiel 1 wiederholt mit den gleichen Mengen- und Konzentrationsverhältnissen und unter Verwendung derselben Mischer-Absetzer-Einheit ; jedoch mit dem Unterschied, daß in die leere Apparatur gleichzeitig die organische Phosphorsäurelösung und die Natronlauge eindosiert wurden. Da durch den großen überschuß an organischer Phase gegenüber der Natronlauge sich die Mischer-Kammer mit Alkohol füllte, wurde durch das Rühren die wäßrige Phase dispergiert und die organische Phase blieb kontinuierlich. Die entstandene Mononatriumphosphatlösung hatte eine P₂O₅-Konzentration von 30,6 Gew%. Der ablaufende Alkohol war trübe und hatte einen Rest-P₂O₅-Gehalt von 0,84 Gew%. Das Entrainment betrug 0,1 Gew%.

Beispiele 6 und 7 (Vergleichsbeispiele)

Es wurden die gleichen Versuche wie in Beispiel 2 und 3 wiederholt, jedoch mit dem Unterschied, daß jeweils die organische Phase kontinuierlich geführt und die wäßrige Phase darin dispergiert wurde, in dem die Phasengrenzfläche deutlich unterhalb der Oberkante der Mischerzone gehalten wurde. Während bei Beispiel 6 (Vergleichsbeispiel zu Beispiel 2) noch eine Natriumphosphatlösung entstand, deren Na : P-Molverhältnis allerdings während des Versuchs zwischen 1,2 und 1,5 : 1 stark schwankte und teilweise Feststoffteilchen in der wäßrigen Lösung auftraten und der abfließende Alkohol einen Restgehalt von 0,95 Gew% P₂O₅ aufwies, mußte der Vergleichsversuch 7 (Vergleichsbeispiel zu Beispiel 3) vorzeitig abgebrochen werden, weil an der Natronlauge-Eintrittsstelle Verkrustungen entstanden, die eine ausreichende Dosierung verhinderten.

Beispiel 8

In der genannten Mischer-Abscheider-Apparatur wurden die Misch- und die Trennzone mit einer wäßrigen Ammoniumphosphatlösung, deren pH-Wert 6 betrug, gefüllt. Dann wurden gleichzeitig 3,2 l/h der oben beschriebenen phosphorsäurehaltigen Lösungsmittelphase aus der Waschstufe mit einem P₂O₅-Gehalt von 10,7 Gew% 0,34 1/h destilliertes Wasser und gasförmiger Ammoniak in die Mischzone eindosiert. Die Ammoniakmenge wurde so gesteuert, daß im Mischer ein pH-Wert von 5,8 aufrechterhalten wurde. Die Phasengrenzfläche im Abscheider wurde deutlich über der Mischer-Oberkante gehalten, so daß die wäßrige Phase kontinuierlich geführt und die organische Phase darin dispergiert wurde. Am unteren Ende des Abscheiders wurde eine Ammoniumphosphatlösung mit einem P₂O₅-Gehalt von 30,2 Gew% abgezogen, während am oberen Teil des Abscheiders die klare Alkoholphase mit einem Restgehalt von 0,07 % P₂O₅ ablief.

Beispiel 9 (Vergleichsbeispiel)

Es wurde wie in Beispiel 8 eine Ammoniumphosphatlösung mit den gleichen Mengenströmen hergestellt, jedoch mit dem Unterschied, daß die Phasengrenzschicht unterhalb der Oberkante der Mischzone gehalten wurde. Bereits bei einem pH-Wert von ca. 5 kam es in der organischen Phase, die in diesem Fall die kontinuierliche Phase bildete zu Feststoffbildung, so daß die Reaktion erheblich gestört wurde. Die abfließende wäßrige Phase hatte nur einen P₂O₅-Gehalt von 26,8 Gew% wührend die organische Phase ca. 1,9 Gew% P₂O₅ gelöst enthielt, d. h. die Umsetzung war nicht vollständig, obwohl überschüssiges Ammoniak dosiert wurde.

Ferner hat sich gezeigt, daß es auch, wenn vor Beginn der Umsetzung die Mischzone mit der wäßrigen Alkalilösung gefüllt wird, zu starken Verkrustungen durch auskristallisierende Phosphate kommt, so daß die Umsetzung nach kurzer Zeit abgebrochen werden muß.

**Patentansprüche**

1. Verfahren zur Herstellung einer wäßrigen Alkaliphosphatlösung durch Mischen einer organischen Phase, bestehend aus einer Lösung von Phosphorsäure in einem mit Wasser nicht oder nur begrenzt mischbaren Lösungsmittel, mit einer wäßrigen Phase, bestehend aus einer Alkalilösung in Wasser, wobei die organische und die wäßrige Phase insgesamt in Volumenverhältnissen größer als 1 : 1 eingesetzt werden, und Abtrennen der gebildeten wäßrigen Alkaliphosphatlösung von der verbleibenden organischen Phase, dadurch gekennzeichnet, daß man

a) das Mischen unter gleichzeitiger Umsetzung der beiden Phasen in mindestens einer Reaktionszone durchführt, die jeweils eine Misch- und eine Trennzone umfaßt, wobei die Mischzone in unmittelbarer Verbindung mit der Trennzone steht, indem sie, zumindest mit ihrer Obergrenze, innerhalb oder direkt unterhalb der Trennzone liegt ;

b) die organische Phase in der wäßrigen Phase kontinuierlich dispergiert, indem man vor Beginn der Umsetzung Misch- oder Trennzone mit einer dem gewünschten Endprodukt entsprechenden wäßrigen Alkaliphosphatlösung füllt ;

c) zur Aufrechterhaltung eines Volumenüberschusses an wäßriger Phase in der Mischzone den Zu- bzw. Ablauf der Phasen zu bzw. von der Reaktionszone so einstellt, daß die Trennschicht der beiden Phasen wesentlich oberhalb der Obergrenze der Mischzone gehalten wird und

d) die beiden Phasen der Reaktionszone in einer solchen Gesamtmenge zuführt, daß sich in der Mischzone ein Volumenverhältnis von organischer : wäßriger Phase von 4 : 6 bis 2 : 8 einstellt.

2. Verfahren nach Anspruch 1, dadurch gekennzeichnet, daß man die Umsetzung in einer Reaktionszone durchführt, die als Mixer-Settler ausgestaltet ist.

3. Verfahren nach Anspruch 1, dadurch gekennzeichnet, daß man die Umsetzung in einer Reaktionszone in Form einer Rührwerks-, oder pulsierenden Siebbodenkolonne durchführt.

## Claims

1. A process for the preparation of an aqueous alkali metal phosphate solution by mixing an organic phase comprising a solution of phosphoric acid in a water-immiscible or sparingly water-miscible solvent, with an aqueous phase comprising an alkali solution in water, the organic phase and the aqueous phase being employed overall in volume ratios greater than 1 : 1, and separating the aqueous alkali metal phosphate solution formed from the organic phase remaining, which comprises

a) carrying out the mixing with simultaneous reaction of the two phases in at least one reaction zone which in each case includes a mixing zone and a separation zone, the mixing zone being connected directly to the separating zone in that, at least by means of its upper limit, it is within or directly below the separating zone ;

b) continuously dispersing the organic phase and the aqueous phase by filling the mixing or separating zone with an aqueous alkali metal phosphate solution corresponding to the desired end product before beginning the reaction ;

c) in order to maintain a volume excess of aqueous phase in the mixing zone, adjusting the supply or discharge of the phases to or from the reaction zone in a manner such that the separating layer of the two phases is kept essentially above the upper limit of the mixing zone, and

d) feeding the two phases into the reaction zone in a total amount such that an inorganic phase : aqueous phase volume ratio of 4 : 6 to 2 : 8 is produced in the mixing zone.

2. The process as claimed in claim 1, wherein the reaction is carried out in a reaction zone designed as a mixer/settler.

3. The process as claimed in claim 1, wherein the reaction is carried out in a reaction zone in the form of a stirred or pulsed sieve-plate column.

## Revendications

1. Procédé pour la fabrication d'une solution aqueuse de phosphate alcalin par mélange d'une phase organique, consistant en une solution d'acide phosphorique dans un solvant non miscible avec l'eau ou seulement d'une miscibilité limitée, avec une phase aqueuse consistant en une solution d'alcali dans l'eau, la phase organique et la phase aqueuse étant utilisées ensemble dans des rapports en volume de plus de 1 : 1, et séparation de la solution aqueuse de phosphate alcalin formée de la phase organique restante, caractérisé en ce que

a) on met en œuvre l'opération de mélange avec réaction simultanée des deux phases dans au moins une zone de réaction qui comporte chaque fois une zone de mélange et une zone de séparation, la zone de mélange étant en relation directe avec la zone de séparation, du fait qu'elle se situe — au moins à sa limite supérieure — à l'intérieur ou juste au-dessous de la zone de séparation ;

b) on disperse en continu la phase organique dans la phase aqueuse, en remplissant la zone de mélange et la zone de séparation avant le début de la réaction avec une solution aqueuse de phosphate alcalin correspondant au produit final désiré ;

c) pour le maintien dans la zone de mélange d'un excès en volume de phase aqueuse, on règle l'écoulement des phases à et de la zone de réaction de telle sorte que la couche de séparation des deux phases soit maintenue nettement au-dessus de la limite supérieure de la zone de mélange ; et

d) on envoie les deux phases à la zone de réaction en quantité totale telle qu'il s'établisse dans la zone de mélange un rapport en volume phase organique/phase aqueuse de 4 : 6 à 2 : 8.

2. Procédé selon la revendication 1, caractérisé en ce que l'on met en œuvre la réaction dans une zone de réaction qui se présente comme un mélangeur-décanteur.

3. Procédé selon la revendication 1, caractérisé en ce que l'on met en œuvre la réaction dans une zone de réaction sous forme d'une colonne à fond à tamis à agitateur ou pulsée.